# NEUE EUROPÄISCHE PATENTSCHRIFT

(11) **EP 0 124 842 B2**
(45) Veröffentlichungstag und Bekanntmachung des Hinweises auf die Entscheidung über den Einspruch: **30.06.1993**
(45) Hinweis auf die Patenterteilung: 01.04.1987
(21) Anmeldenummer: 84104821.8
(22) Anmeldetag: 28.04.1984
(51) Int. Cl.: F23R 5/00

(54) **Energieerzeugungsanlage mit einer Wirbelbettbrennkammer**
Power plant with a fluidized bed combustor
Installation pour la production d'énergie avec une chambre de combustion à lit fluidisé

(30) Priorität: 05.05.1983 SE 8302572; 23.08.1983 SE 8304558
(43) Veröffentlichungstag der Anmeldung: 14.11.1984
(73) Patentinhaber: ASEA Stal Aktiebolag, S-612 20 Finspang (SE)
(72) Erfinder: Brännström, Roine, Dipl.-Ing., S-612 00 Finspang (SE)
(74) Vertreter: Boecker, Joachim, Dr.-Ing.

(56) Entgegenhaltungen:
- DE-A- 3 024 478
- DE-C- 948 105
- US-A- 4 135 885
- ARGONNE NATIONAL LABORATORY "RAPPORT ANL/CEN/FE-81-3", Oktober 1982, Argonne, Illinois. J. E. HANWAY, JR. und W. F. PODOLSKI "Discharge and Handling of Solids from Pressurized Fluidized-Bed Combustors"
- Bericht DOE/MC/14129-173 von NCB Coal Utilization Research Laboratory Leatherhead Feb. 81, "Pressurized Fluidized Bed Combustion", Vol. III - Test 2, Results.

## Beschreibung

### Energieerzeugungsanlage mit einer Wirbelbettbrennkammer

Die vorliegende Erfindung betrifft eine Energieerzeugungsanlage mit einer Wirbelbettbrennkammer gemäß dem Oberbegriff des Anspruches 1. Eine solche Anlage ist im wesentlichen bekannt aus der US-A-4 135 885.

Die Erfindung bezieht sich insbesondere auf solche Energieerzeugungsanlagen der vorgenannten Art, die mit einem unter Druck stehenden Wirbelbett in einer Brennkammer arbeiten, die in einem Druckbehälter angeordnet ist (PFBC-Anlage, wobei "PFBC" Pressurized Fluidized Bed Combustion bedeutet).

In einer PFBC-Anlage werden ein Gas- und ein Dampfzyklus oftmals miteinander kombiniert. Sowohl Treibgas für die Gasturbinen wie Dampf für die Dampfturbinen werden in einer gemeinsamen Brennkammer erzeugt. Hierdurch kann der Gesamtwirkungsgrad erhöht werden, und es können vorzugsweise feste Brennstoffe verbrannt werden. Außerdem ist es möglich, umweltschädliche Produkte, wie z.B. Schwefel, wirksam zu absorbieren.

Um die gewünschte Ausgangsleistung zu erhalten, muß die Betthöhe gesteuert werden. Dabei muß Bettmaterial aus der Brennkammer entfernt oder dieser zugeführt werden. Aufgrund seiner hohen Temperatur, 750 - 900 °C, und anderer Eigenschaften bereitet die Handhabung des Bettmaterials schwer zu lösende Probleme.

Diese Probleme und der Stand der Technik hinsichtlich der Hilfsmittel zur Handhabung von Bettmaterial in Anlagen mit einer Wirbelbettbrennkammer werden ausführlich in dem RapportANL/CEN/FE-81-3 von Argonne National Laboratory, Argonne, Illinois mit dem Titel "Discharge and Handling of Solids from Pressurized Fluidized Bed Combustors" von John E. Hanway Jr. und W.F. Podolski beschrieben.

Aus der DE-C-948 105 ist eine Wirbelbettverbrennungsanlage bekannt, bei der dem Wirbelbett ständig Wirbelbettmaterial entzogen und wieder zugeführt wird. Das abgezogene Wirbelbettmaterial wird in einer Rohrleitung mit einem verhältnismäßig kalten komprimierten Gas in Berührung gebracht, welches dem Wirbelbettmaterial Wärme entzieht. In einem Zyklon wird das Bettmaterial von dem Gas getrennt. Das Bettmaterial wird dem Wirbelbett wieder zugeführt, während das Gas mit den Verbrennungsgasen aus dem Wirbelbett gemischt wird und einer Turbine zugeleitet wird. Durch diese Maßnahme wird die Temperatur der in die Turbine einströmenden Verbrennungsgase gesteuert. Das Verfahren dient nicht der Leistungssteuerung der Wirbelbettverbrennungsanlage, und die im Wirbelbett vorhandene Menge an Bettmaterial ist praktisch ständig konstant.

Aus der Druckschrift "Pressurized fluidized bed combustion" volume 111, test 2 results; DOE/MC/14129-173 (DE 81025923) der NCB Coal Utilization Research Laboratory, Leatherhead, England, Februar 1981, ist eine Energieerzeugungsanlage bekannt, bei der zwischen der Brennkammer und dem Vorratsbehälter eine einzige Leitung fürden Ausschub und die Rückführung von Material aus der Brennkammer beziehungsweise in die Brennkammer vorgesehen ist. Die gemeinsame Material-Transferleitung ist nach unten aus der Brennkammer herausgeführt, und hat einen nach unten verlaufenden vertikalen Abschnitt, an den sich ein schräg nach oben verlaufender Abschnitt anschließt, der in den unteren Bereich eines zweiten vertikal verlaufenden Abschnittes mündet, der sich vertikal von unten in den Vorratsbehälter erstreckt. Der Vorratsbehälter ist innen mit einem axial verstellbaren Rohr versehen, an das die Transferleitung angeschlossen ist. Je nach Förderrichtung muß dieses Rohr in vertikaler Richtung verschoben werden, wobei eine im unteren Teil des Vorratsbehälters vorhandene Ventilöffnung freigegeben beziehungsweise verschlossen wird. Die Notwendigkeit eines solchen verschiebbares Rohres ist angesichts des zu transportierenden heißen Materials wegen seiner hohen Beanspruchung und Störanfälligkeit sehr nachteilig. Der Vorratsbehälter ist über ein Ventil an die Außenatmosphäre angeschlossen. Zur Überführung von Bettmaterial von der Brennkammer zum Vorratsbehälter ist einleitend eine große Menge Fördergas erforderlich, welches über eine Fülle von Düsen am schräg verlaufenden Rohrabschnitt, über eine Düse am unteren Ende des vertikalen Rohrabschnittes unter dem Vorratsbehälter und am unteren Ende des verschiebbaren Rohres im Vorratsbehälter eingeblasen wird. Dies ist notwendig, weil die Transferleitung mit nicht fluidisiertem und dicht gepacktem Bettmaterial gefüllt ist. Wenn der Transport von Gas in Gang gekommen ist, kann die Zuführung von Förderluft vermindert werden, da der Differenzdruck zwischen Vorratsbehälter und Brennkammer den Transport weitgehend besorgt. Ein vollständiger Verzicht auf Förderluft ist nicht möglich. Beim Rücktransport von Bettmaterial aus dem Vorratsbehälter in die Brennkammer wird Fördergas an dem unter der Brennkammer angeordneten senkrechten Rohrabschnitt eingeblasen. Die Wegstrecke, über die das Material von tiefsten Punkt der Transferleitung bis in die Brennkammer gehoben werden muß, ist relativ groß. Auch wenn kein Materialtransfer stattfindet, muß ständig ein Inertgas, zum Beispiel Stickstoff, über die Eintrittsöffnungen in der Transferleitung zugeführt werden, um ein Verstopfen dieser Öffnungen durch das in der Transferleitung befindliche Material zu verhindern. Durch das Fördergas wird das Bettmaterial in unerwünschterweise abgekühlt. Der Aufwand an Fördergas und zusätzlichem Inertgas ist relativ groß und verteuert den Betrieb der Anlage. Außerdem besteht die Gefahr, daß bei Verwendung von nicht inertem Fördergas die in dem Bettmaterial befindlichen Brennstoffpartikel in der Transferleitung und dem Vorratsbehälterverbrennen, was zu hohen lokalen Temperaturen und zum Zusammensintern von Bettmaterial führen kann.

Aus der US-A-4 135 885 ist eine Energieerzeugungsanlage mit einer Wirbelbettbrennkammer bekannt, bei welcher die Brennlammer zwei übereinander angeordnete Wirbelbetten hat, um eine weitgehende Entschwefelung der Rauchgase zu erzielen. Die untere Brennkammer ist an einen Vorratsbehälter angeschlossen, in welchem das Bettmaterial des unteren Wirbel bettes während längerer Betriebspausen gelagert werden kann. Dieser Vorratsbehäiter ist über eine Ausschubleitung, in der ein Ventil liegt, mit der Brennkammer verbunden. Die Ausschubleitung ist in Richtung zum Vorratsbehälter nach unten geneigt, so daß beim Öffnen des Ventils Bettmaterial unter der Wirlung der Schwerkraft aus der Brennkammer in den Vorratsbehälter fließen kann. Ferner ist der Vorratsbehälter über eine separate Rückführleitung mit der Brennkammer verbunden, wobei derAnschluß an die Brennkammer bedeutend höher als der Vorratsbehälter liegt. Mit Hilfe von Druckgas, das über ein Ventil zugeführt wird, kann das Bettmaterial aus dem Vorratsbehälter in die Rückführleitung gedrückt werden und durch diese in die Brennkammer zurückgefördert werden. In der Druckschrift ist auch erwähnt, daß während des normalen Betriebes Bettmaterial aus dem unteren Wirbelbett in den Vorratsbehälter übergeführt werden kann, so daß die normalerweise innerhalb des Wirbelbettes liegenden Wasserrohre freigelegt werden können.

Der Erfindung liegt die Aufgabe zugrunde, eine Energieerzeugungsanlage der eingangs genannten Art zu entwicklen, die zuverlässig arbeitet, in ihrem Aufbau einfach ist und ohne bewegliche Teile auskommt, die in direktem Kontakt mit dem heissen, erosiven Bettmaterial stehen.

Zur Lösung dieser Aufgabe wird eine Energieerzeugungsanlage gemäss dem Oberbegriff des Anspruches 1 vorgeschlagen, die erfindungsgemäss die im kennzeichnenden Teil des Anspruches 1 genannten Merkmale hat.

Vorteilhafte Ausgestaltungen der Erfindung sind in den weiteren Ansprüchen genannt.

Gemäss der Erfindung ist also mindestens ein Vorratsbehälter über zwei separate Leitungen an die Brennkammer angeschlossen, von denen die eine zum Transport von Bettmaterial aus der Brennkammer in den Vorratsbehälter dient und die andere zur Rückführung von Bettmaterial aus dem Vorratsbehälter zur Brennkammer. Der Vorratsbehälter ist über eine mit Ventil versehene Leitung an einen Raum mit geringerem Druck, als er in der Brennkammer herrscht, angeschlossen. Hierdurch kann eine Druckdifferenz erzielt werden, die ein Überströmen derfluidisierten Bettmasse in der Brennkammer bewirkt. Die Rückführleitung ist über eine andere mit Ventil versehene Leitung an eine Druckgasquelle mit höherem Druck, als er in der Brennkammer herrscht, angeschlossen. Durch Einführung von Druckgas in die Rückführleitung wird ein Rücktransport von Bettmaterial zur Brennkammer bewirkt. In einer PFBC-Anlage ist der Vorratsbehälter zweckmässigerweise in demselben Druckbehälter wie die Brennkammer untergebracht. Der Vorratsbehälter braucht dann nur fürverhältnismässig kleine Druckdifferenzen bemessen zu sein.

Das Austrittsende der Ausschubleitung mündet entweder in einem Zyklon oder einem anderen Staubabscheider, der oberhalb des Vorratsbehälters oder direkt in diesem angeordnet ist. Im erstgenannten Falle wird das Bettmaterial vom Transportgas abgeschieden und fällt nach unten in den Vorratsbehälter. Im letztgenannten Falle wird das Bettmaterial im Vorratsbehältervon dem Transportgas getrennt, und das Transportgas-eventuell nach Reinigung in einer Reinigungsvorrichtung - einer Turbine zugeführt oder in die Atmosphäre abgeleitet. Das Austrittsende der Ausschubleitung wird vorzugsweise im wesentlichen vertikal in den oberen Teil des Vorratsbehälters eingeführt und endet in einer Höhe, die der maximalen Füllhöhe des Vorratsbehälters entspricht. Hierdurch erhält man einen automatisch wirkenden Überfüllungschutz, da der Transport unterbrochen wird, wenn das im Vorratsbehälter befindliche Bettmaterial die Mündung der Ausschubleitung erreicht. Die Wirkung wird weiter verbessert, wenn das Ausschubrohr oberhalb der Mündung mit Öffnungen in der Rohrwand versehen ist. Dadurch wird eine Fluidisierung der obersten Schicht des Bettmaterials in dem Vorratsbehälter vermieden, so dass der Transport von Bettmaterial in einer genau definierten Höhe zum Stillstand kommt.

Gemäss einer Ausführungsform der Erfindung ist die Ausschubleitung an ihrem Eintrittsende mit einer Fluidisierungsanordnung versehen. Hierdurch kann man eine einem günstigen Materialtransport angepasste Luftzufuhr erreichen. Das Verhältnis von Bettmaterial und Transportgas kann hierdurch so gesteuert werden, dass die gewünschte Kapazität erzielt wird.

Gemäss der Erfindung wird die Rückführleitung mit einem Ventil oder in solcher Weise ausgeführt, dass sie ein Materialschloss bildet, so dass eine ungewollte Rückführung von Bettmaterial vermieden wird. Die Rückführleitung kann mit einem sog. L-Ventil oder einem Ventil mit ähnlicher Funktion versehen werden. Die Mündung der Leitung wird zweckmässigerweise am unteren Teil der Brennkammerangeordnet. Das Ventil steht über die genannte Leitung mit einer Druckgasquelle mit höherem Druck, als er in der Brennkammer herrscht, in Verbindung. Durch die Zufuhr von Gas zum L-Ventil erhält man einen Rücktransport von Bettmaterial zur Brennkammer. Als Druckmittelquelle kann beispielsweise der Druckbehälter selbst dienen. Eventuell kann der Druck über einen Booster-Kompressor verstärkt werden.

Anhand der in den Figuren gezeigten Ausführungsbeispiele soll die Erfindung nähererläutertwerden. Es zeigen:
Figur 1 und 2: schematisch zwei Ausführungsformen von Energieerzeugungsanlagen gemäss der Erfindung mit einer in einem Druckbehälter eingeschlossenen Brennkammer,
Figur 3: eine alternative Ausführungsform des Anlagenteils zur Steuerung der Betthöhe;
Figur 4: ein Ausführungsbeispiel für den Einlaufteil des Ausschubrohres,
Figur 5: ein Ausführungsbeispiel für die Ausgestaltung des Rückführrohres an der Anschlussstelle in der Brennkammer,
Figur 5a bis 5d: alternative Ausführungsformen der vorgenannten Anschlussstelle.

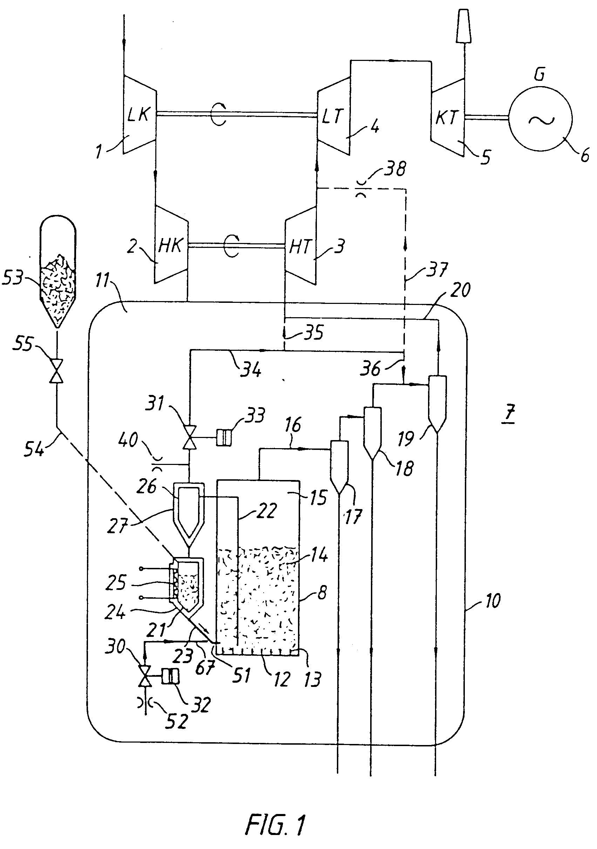

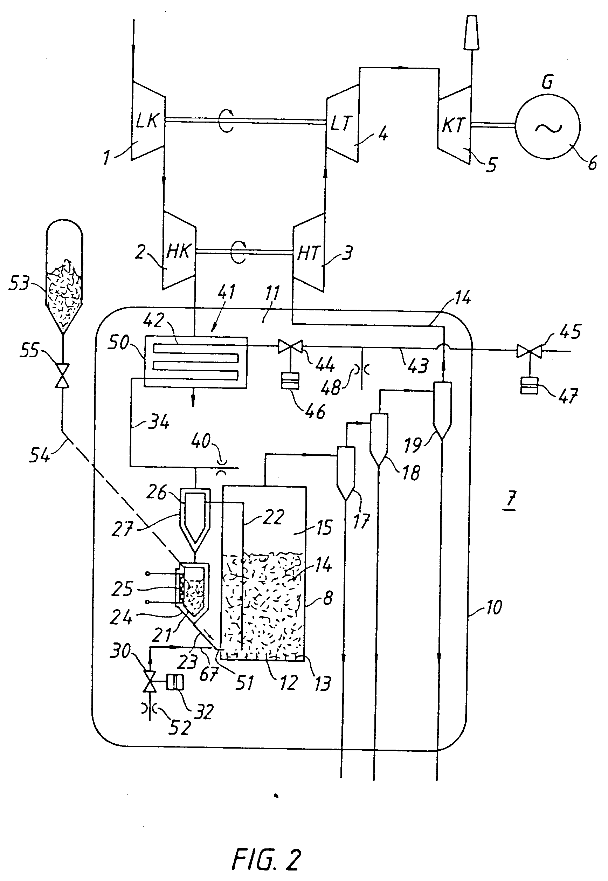

Zu der Energieerzeugunganlage gehören, wie aus den Figuren 1 und 2 hervorgeht, ein Niederdruckkompressor 1, ein Hochdruckkompressor 2, eine Hochdruckturbine 3, eine Niederdruckturbine 4 und eine Antriebsturbine 5, die einen Generator antreibt. Die Ausführung, die in bekannter Weise dreiachsig ist, nämlich mitjeeinerWeiiefürdie Niederdruckteile, die Hochdruckteile und die Antriebsturbine mit dem Generator, zeigt nur eine von mehreren möglichen Ausführungsformen und dient somit nur als Beispiel.

Im allgemeinen gehört auch eine Dampfturbine zu derAnlage, die einen Generator antreibt und die ihrerseits von Dampf angetrieben wird, welcher in Rohren in dem Wirbel bett der Brennkammer erzeugt wird. Diese sind jedoch nicht dargestellt.

Die Turbinen 3,4 und 5 beziehen ihre Energie von einer Brennkammeranlage 7 mit einer Brennkammer 8 in einem Druckbehälter 10, einer sog. PFBC-Anlage. Die Kompressoren 1 und 2 versorgen den Raum 11 in dem Druckbehälter 10 mit komprimierter Luft. Die Brennkammer 8 hat einen Boden 12 mit Düsen 13, durch welche dem Wirbelbett 14 Luft zur Fluidisierung und zur Verbrennung des dem Bett zugeführten Brennstoffes zugeleitet wird. Der Brennstoff wird dem Bett durch ein nicht dargestelltes Brennstoffsystem bekannter Art zugeführt. In dem Bett 14 gebildete heisse Verbrennungsgase sammeln sich in dem Freiraum 15 der Brennkammer 8 und verlassen diese durch die Leitung 16. Sie werden in Zyklonen 17,18 und 19 gereinigt und danach durch die Leitung 20 zur Hochdruckturbine 3 geleitet. In den Zyklonen abgeschiedene Asche und anderer Staub aus dem Wirbelbett werden von den Zyklonen in bekannter Weise abgeführt, beispielsweise durch Aschetransportvorrichtungen, wie sie in der EP-A-108 505 (veröffentlicht am 16.5.84) näher beschrieben sind. Die Figuren zeigen eine Gruppe von in Reihe geschalteten Zyklonen. In Wirklichkeit sind mehrere parallelgeschaltete Gruppen dieser Art vorhanden.

Bei einer Energieerzeugungsanalge dieser Art wird die Ausgangsleistung u.a. durch Veränderung der Betthöhe gesteuert. Zu diesem Zweck sind in dem Druckbehälter 10 ein oder mehrere Behälter 21 neben oder über der Brennkammer 8 angebracht, in dem/denen gerade nicht benötigtes Bettmaterial gespeichert werden kann. Ein solcher Vorratsbehälter ist mit der Brennkammer 8 über zwei Leitungen 22 und 23 zum Ausschub von Material aus dem Bett 14 in den Vorratsbehälter und zum Rücktransport von Bettmaterial aus dem Vorratsbehälter21 in die Brennkammer 8 verbunden.

Um ein Gleichgewicht sicherzustellen, damit ein unbeabsichtigter Transport von Bettmaterial und Transportgas zwischen Brennkammer 8 und Vorratsbehälter 21 vermieden wird, muss der Druck an den Mündungen der Leitungen im wesentlichen gleich gross sein. Dies kann beispielsweise dadurch erreichtwerden, dass die Mündungen auf gleicher Höhe über dem Boden 12 der Brennkammer 8 liegen. Der Vorratsbehälter 21 wird zweckmässigerweise in dem Druckbehälter 10 plaziert. Der Druckunterschied zwischen derAussen- und Innenseite des Vorratsbehälters 21 ist dann klein, so dass die mechanischen Beanspruchungen des Vorratsbehälters gering sind. Einer Plazierung des Vorratsbehälters ausserhalb des Druckbehälters 10 steht prinzipiell jedoch nichts entgegen, doch setzt eine solche Anordnung voraus, dass der Vorratsbehälter für denselben hohen Druck bemessen wird wie der Druckbehälter 10. Der Vorratsbehälter 21 ist zweckmässigerweise isoliert und, wie gezeigt, von einer isolierenden Hülle 24 umgeben und mit einer Heizvorrichtung 25, die elektrischer Art sein kann, zum Warmhalten des Bettmaterials während des Aufbewahrens versehen. Ein solches Warmhalten hat den Vorteil, dass eine Störung der Verbrennung durch Temperatursenkung des in der Brennkammer befindlichen Bettmaterials bei einem schnellen Rücktransport grosser Mengen von Bettmaterial vermieden wird.

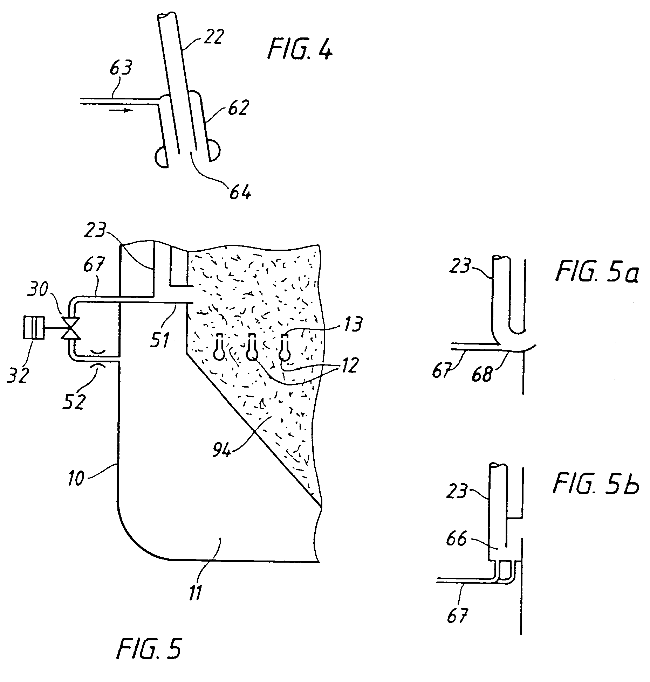

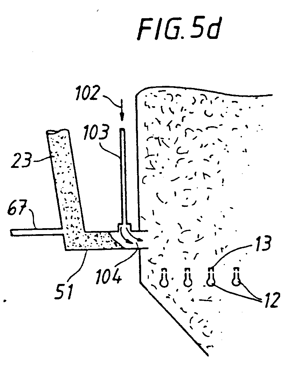

Bei den Ausführungsformen gemäss Figur 1 und 2 gibt es einen Zyklonenabscheider 26, der auch mit einer isolierenden Schicht 27 versehen ist. Die Ausschubleitung 22 geht aus vom unteren Teil des Bettes 14 unmittelbar über dem Boden 12 der Brennkammer 8 und ist an den Zyklon 26 angeschlossen, in dem Treibgas von dem Bettmaterial abgeschieden wird, während das Bettmaterial in den Vorratsbehälter 21 hinunterfällt. Die Rückführleitung 23 mündet ebenfalls unmittelbar über dem Boden 12. Sie hat an ihrer Mündung im Bett 14 ein Materialventil, das verhindert, dass das Bettmaterial ohne Hilfe von Transportgas aus dem Behälter 21 in die Brennkammer 8 rinnt. Das Mündungsteil kann zweckmässigerweise als L-Ventil, wie es in Figur 5 gezeigt ist, alternativ als J-Ventil, wie es in Figur 5a gezeigt ist, oder als U-Ventil, wie es in Figur 5b gezeigt ist, ausgeführt sein. Mit diesen Ausführungsformen erhält man eine wirksame und sichere Ventilfunktion ohne Verwendung beweglicher Ventilteile, wie Schieber, Ventilteller oder dgl.. Im Hinblickaufdie hohe Temperatur des Bettmaterials, die 750-900 °C beträgt, ist das Fehlen beweglicher, in direktem Kontakt mit dem Bettmaterial stehender Ventilteile von ausserordentlich hohem Wert.

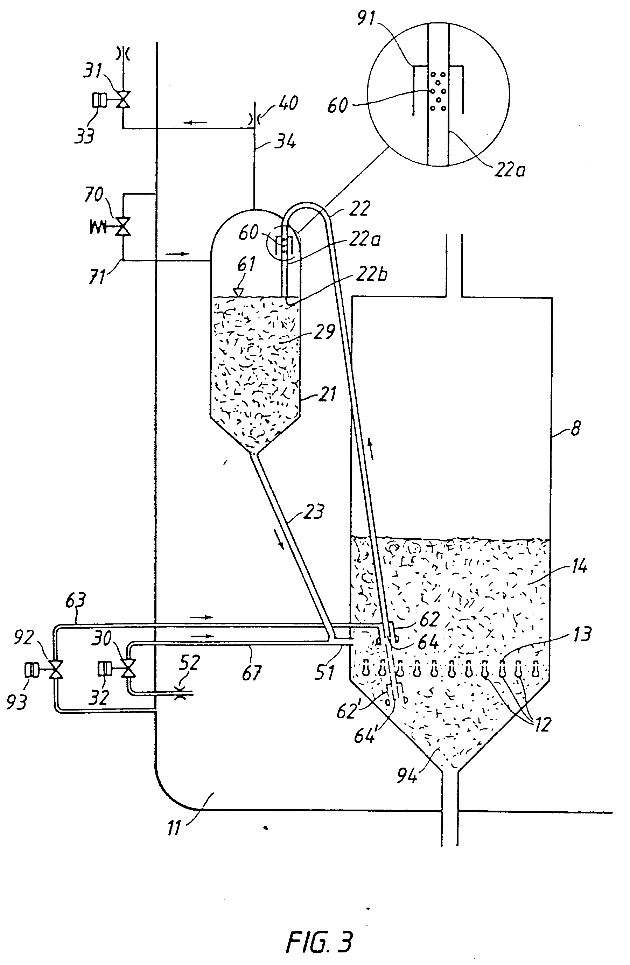

Die Steuerung des Materialtransportes zwischen Brennkammer 8 und Vorratsbehälter 21 erfolgt in dem Ausführungsbeispiel nach Figur 1 mit zwei Ventilen 30 und 31 mit zugehörigen Betätigungsvorrichtungen 32 und 33. Diese sind bei dem gezeigten Ausführungsbeispiel in dem Druckbehälter 10 untergebracht, doch werden sie mit Rücksicht auf die Zugänglichkeit und Wartung vorzugsweise ausserhalb des Druckbehälters plaziert, so wie es in den Figuren 3 und 5 gezeigt ist. Diese Ventile können zweipunktsteuerbar (offen oder geschlossen) oder kontinuierlich steuerbar sein. Der Ausschub von Bettmaterial durch die Leitung 22 wird durch Senkung des Druckes im Zyklon 26 und/oder im Vorratsbehälter 21 erreicht, indem das Ventil 31 geöffnet wird, so dass eine Verbindung mit einem Raum zustandekommt, in dem ein niedrigerer Druck als in der Brennkammer herrscht. Der Zyklon 26 und damit der Vorratsbehälter 21 können durch die Leitungen 34, 35 direkt an die Hochdruckturbine 3, alternativ durch die Leitungen 34, 36 an einen der Zyklone 17, 18, 19 oder durch die Leitungen 34, 37 an die Niederdruckturbine 4 angeschlossen werden. In dem letztgenannten Fall kann es angebracht sein, den Gasstrom durch eine Drossel 38, beispielsweise in der Leitung 37, zu begrenzen. Die Leitung 34 ist zwischen dem Zyklon 26 und dem Ventil 31 über eine Drossel 40 mit dem Raum 11 des Druckbehälters 10 verbunden. Bei einem eventuellen Leckfluss durch das Ventil 31 infolge einer unvollständigen Dichtung dient der Luftstrom durch die Drosselstelle 40 als Sperrluft, die verhindert, dass heisses Gas und erodierendes Material von der Brennkammer durch das Ventil herauslecken und grosse Wärmeverluste oder Schäden am Ventil verursachen.

Das Transportgas kann auch in der Atmosphäre ausserhalb des Druckbehälters 10 geleitet werden, und zwar entweder direkt oder, wie in Figur 2 gezeigt, durch einen an die Leitung angeschlossenen Kühler41, der auch als flussbegrenzende Drossel dienen kann. Dieser Kühler kann nach demselben Prinzip wie die in der EP-A-108 505 beschriebene Aschetransportanordnung ausgebaut sein. Die Rohre 42 des Kühlers sind auf der Eintrittsseite an die Leitung 34 und auf der Austrittsseite an eine Leitung 43 angeschlossen, die in einem geeigneten Raum ausserhalb des Druckbehälters 10 mündet, in dem ein niedrigerer Druck, z.B. Atmosphärendruck, herrscht. In der Leitung 43 sind hintereinander zwei Ventile 44 und 45 angeordnet, die durch die Betätigungsvorrichtungen 46 und 47 betätigt werden. Hierbei kann es sich um kontinuierlich steuerbare Ventile oder um zweipunktsteuerbare Ventile handeln. Diese Ventile entsprechen dem Ventil 31 in Figur 1. Zwischen den Ventilen 44 und 45 ist die Leitung 43 mit dem Raum 11 über eine Drossel 48 verbunden. Wenn der Transport von Bettmaterial aus der Brennkammer 8 in den Vorratsbehälter 21 abgebrochen werden soll, wird zuerst das Ventil 44 und dann das Ventil 45 geschlossen. Wenn das Ventil 45 geschlossen wird, wird es von reiner Luft aus dem Raum 11 durchströmt, wodurch die Voraussetzungen für eine vollkommene Dichtung verbessert werden. Bei einer eventuellen Undichtigkeit des Ventils 44 strömt durch dieses nur reine Luft mit niedriger Temperatur zur Brennkammer, wo sie ausgenutzt wird. Ist auch das Ventil 45 undicht, werden Gas und erodierendes Material vom Bett daran gehindert, zu dem Ventil 45 zu gelangen. Der Kühler 41, der aus den Rohrteilen 42 besteht, ist in ein Gehäuse 50 eingeschlossen, das den Luftstrom vom Kompressor 2 auf seinem Weg zum Raum 11 an den Rohrteilen 42 vorbeiführt, so dass eine gute Kühlung des Transportgases stattfindet. Durch die Verwendung des Kühlers 41 kann die Wärme des Transportgases genutzt werden, und gleichzeitig erhält man die Möglichkeit, für niedrigere Temperaturen gefertigte billigere Ventile 44, 45 zu verwenden. Mit Rücksicht auf die Zugänglichkeit bei der Wartung wird vorzugsweise auch das Ventil 44 ausserhalb des Druckbehälters 10 angeordnet.

Die Rückführung von Material vom Vorratsbehälter 21 zur Brennkammer 8 erfolgt durch das Rohr 23 mittels Transportluft aus dem Raum 11, die dem als L-Ventil 51 ausgebildeten Mündungsteil der Leitung 23 zugeführt wird. Die Steueruung der Rückführung erfolgt über das Ventil 30. Hierbei kann es sich um ein zweipunktsteuerbares Ventil in Kombination mit einer flussbegrenzenden Drossel 52 oder um ein kontinuierlich steuerbares Ventil handeln, wobei der Materialfluss in der Leitung 23 mit zunehmendem Luftstrom durch das Ventil 30 grösserwird. Der Vorratsbehälter 21 steht über eine Leitung 54 und ein Ventil 55 mit einem zweiten Vorratsbehälter 53 für weiteres Bettmaterial in Verbindung. Von diesem letztgenannten Behälter 53 kann dem Behälter 21 bei Bedarf neues Bettmaterial zugeführt werden.

Figur 3 zeigt eine alternative Ausführungsform, bei derdas Ausschubrohrdirekt im Vorratsbehälter21 mündet. Das in dem Behälter 21 mündende Rohrende 22a ist nach unten gerichtet. Durch diese Formgebung wird eine Verschlusswirkung erzielt, welche den Transport von Bettmaterial automatisch unterbricht, sobald das Niveau im Vorratsbehälter 21 die Rohrmündung 22b erreicht hat. Das Rohrende 22a kann in einem gewissen Abstand über der Mündung 22b mit Öffnungen 60 versehen sein. Das Ausströmen von Gas durch diese Öffnungen bewirkt eine verbesserte Schliess- und Stoppfunktion, so dass der Transport von Bettmaterial unabhängig von den Druckdifferenzverhältnissen zwischen der Brennkammer 8 und dem Vorratsbehälter21 stets bei dergleichen Höhe der Oberfläche 61 des Bettmaterials unterbrochen wird. Durch die Anbringung einer nach oben geschlossenen Hülse 91 um den Rohrabschnitt 22a mit den Öffnungen 60 kann die Funktion noch weiter verbessert werden.

Bei der in Figur 3 gezeigten Ausführungsform ist die Einlauföffnung 64 von einer Hülse 62 umgeben, der Luft aus dem Raum 11 des Druckbehälters 10 über die Leitung 63 mit dem Ventil 92, das mit der Betätigungsvorrichtung 93 betätigt wird, zugeführt werden kann. Das Ventil 92 kann kontinuierlich steuerbar oder zweipunktsteuerbar sein. Durch die Luftzufuhr an der Einlauföffnung des Rohres 22 kann man eine lebhafte Fluidisierung und Luftzufuhr und damit ein günstiges Verhältnis zwischen Bettmaterial und Transportluft in der Leitung 22 erreichen. Der Materialfluss kann auf diese Weise innerhalb weiter Grenzen gesteuert und so angepasst werden, dass man einen gewünschten Fluss bei einer bestimmten Druckdifferenz zwischen Brennkammer 8 und dem Vorratsbehälter 21 erhält. Bei zunehmendem Luftstrom durch das Ventil 92 wird der Materialfluss im Rohr 22 kleiner. Bei der Ausführungsform nach Figur 3 ist die Einlauföffnung 64 über dem Fluidisierungsboden 12 der Brennkammer und auf gleicher Höhe wie das L-Ventil 51 plaziert. Bei der gezeigten Ausführungsform mit einem Boden, der Bettmaterial hindurchlassen kann, kann die Mündung auch in dem Raum 94 unter dem Boden 12 plaziert sein, so wie es gestrichelt (62' und 64') angedeutet ist. In diesem Fall ist eine Ausführung mit einer Hülse 62, der Luft zur Fluidisierung des Bettmaterials zugeführt wird, und mit zusätzlicher Transportluft an der Rohrmündung für eine gute Funktion erforderlich.

Wie bereits erwähnt, erfolgt die Rückführung des Bettmaterials durch die Rückführleitung 23. Luft aus dem Raum 11 des Druckbehälters 10 wird einem L-Ventil 51 oder anderen Ventilen 68, 66 gemäss den Figuren 5, 5a, 5b und 5d zugeführt, damit das in den Ventilen vorhandene Bettmaterial fluidisiert und in Bewegung gesetzt wird, Die Rohre 67, die Luft zu den Ventilen leiten, sind vorzugsweise an deren unteres Teil angeschlossen, so wie es in den Figuren gezeigt ist.

Bei der Verbrennung von Brennstoff mit niedriger Reaktivität (beispielsweise gewisse Kohlenarten) oder Brennstoff mit einer grossen Partikelgrössenverteilung kann es vorkommen, dass der Anteil von Kohle in dem Bettmaterial verhältnismässig gross wird (1-3%). In solchen Fällen können beim Ausschub von Material aus dem Bett Probleme auftreten.

Wenn das Ventil 31 geöffnet wird und in dem Vorratsbehälter 21 eine Drucksenkung eintritt, so strömt eine kleine Menge von Luft und Verbrennungsgas rückwärts durch das L-Ventil 51 und durch das stillstehende Material in der Rückführleitung 23 nach oben. Dabei verbrennen in dem Material befindliche Brennstoffpartikel teilweise, wodurch die Temperatur steigt und so gross werden kann, dass das Material schmilzt. Hierdurch kann sich ein Klumpen bilden, der eine spätere Rückführung des Materials zur Brennkammer 8 verhindert. Um eine solche Temperaturerhöhung zu verhindern, kann man eine ausreichende Kühlung der Leitung 23 vorsehen, oder man kann an der Mündung des L-Ventils eine ausreichende Menge inertes Gas zuführen, so wie es in Figur 5d gezeigt ist. Das Inertgas 102 wird durch das Rohr 103 der Mündüng des L-Ventils zugeführt, wo sich eine Sperrzone 104 aus Inertgas bildet. Das in die Rückführleitung 23 nach oben gesaugte Gas besteht dann aus Inertgas, so dass die erwähnte Verbrennung von Partikeln unmöglich ist.

Das Inertgas kann beispielsweise Stickstoff sein, das von einer separaten Druckgasquelle geliefert wird.

Eine Alternative bei einer PFBC-Anlage mit Dampfgenerator besteht darin, dass man Dampf benutzt, was billig und praktisch ist, da hier Dampf immer zur Verfügung steht.

Zur Begrenzung der Druckdifferenz zwischen dem Vorratsbehälter21 und dem Raum 11 des Druckbehälters 10 ist zwischen dem Raum 11 und dem Vorratsbehälter 21 ein Ventil angebracht, das bei einem gewissen Differenzdruck öffnet. Dieses Ventil kann ausserhalb des Druckbehälters in einer Leitung 71 angebracht sein.

## Patentansprüche

1. Energieerzeugungsanlage mit einer Wirbelbettbrennkammer (8) zur Verbrennung eines dem Wirbelbett (14) zugeführten Brennstoffes und mit Anordnungen zur Überführung von Bettmaterial aus der Brennkammer (8) in zumindest einen Vorratsbehälter(21) und umgekehrt, mit einer separaten Ausschubleitung (22) für die Überführung von Bettmaterial aus der Brennkammer in den Vorratsbehälter (21), wobei der Transport von Bettmaterial durch die Ausschubleitung (22) durch ein Ventil (31) steuerbar ist, und mit einer separaten Rückführleitung (23) für die Rückführung von Bettmaterial aus dem Vorratsbehälter (21) in die Brennkammer, wobei zum Transport des Bettmaterials durch diese Leitung überein an eine Druckgasquelle angeschlossenes Ventil (30) Druckgas zuführbar ist, dadurch gekennzeichnet,
daß zur Steuerung der Betthöhe der Brennkammer in Abhängigkeit von den Betriebsverhältnissen und zur Vermeidung eines direkten Kontaktes von beweglichen Teilen der Überführungsanordnung mit dem heißen erosiven Bettmaterial
- der Vorratsbehälter (21) über eine mit dem Ventil (31) versehene Leitung (34) an einen Raum angeschlossen ist, in dem ein geringerer Druck als in der Brennkammer (8) herrscht,
- die Ausschubleitung (22), welche die Brennkammer (8) mit dem Vorratsbehälter verbindet, keine Ventile mit beweglichen Teilen aufweist,
- das Bettmaterial im wezentlichen gegen die Wirkung der Schwerkraft aus der Brennkammer in den Vorratsbehälter (21) gefördert wird,
- in der Rückführleitung (23) vom Vorratsbehälter zur Brennkammer ein Materialschloß (51) vorhanden ist, welches einen durch die Wirkung der Schwerkraft ausgelösten ungewollten Transport von Bettmaterial aus dem Vorratsbehälter in die Brennkammer verhindert,
- und das Materialschloß (51) über das genannte, an eine Druckgasqelle (11) angeschlossene Ventil (30) steuerbar ist.

2. Energieerzeugungsanlage nach Anspruch 1, dadurch gekennzeichnet, dass die Brennkammer (8) in einen Druckbehälter (10) eingeschlossen ist, der mit komprimierter Verbrennungsluft unter Druck gesetzt ist (sog. PFBC-Anlage).

3. Energieerzeugungsanlage nach Anspruch 2, dadurch gekennzeichnet, dass der Vorratsbehälter (21 ) in dem Druckbehälter (10) angeordnet ist.

4. Energieerzeugungsanlage nach einem der vorhergehenden Ansprüche, dadurch gekennzeichnet, dass das Austrittsende der Ausschubleitung (22) in einem Staubabscheider (26) oberhalb des Vorratsbehälters mündet.

5. Energieerzeugungsanlage nach einem der Ansprüche 1 bis 3, dadurch gekennzeichnet, dass das Austrittsende (22a) der Ausschubleitung direkt im oberen Teil des Vorratsbehälters mündet und im wesentlichen vertikal gerichtet ist.

6. Energieerzeugungsanlage nach Anspruch 5, dadurch gekennzeichnet, dass die Wand im Austrittsende (22a) der Ausschubleitung (22) in einem gewissen Abstand von der Mündung mit Öffnungen (60) versehen ist.

7. Energieerzeugungsanlage nach Anspruch 6, dadurch gekennzeichnet, dass das Austrittsende (22a) der Ausschubleitung (22) mit einer Hülse (91) versehen ist, die konzentrisch um den Abschnitt mit den Öffnungen (60) angeordnet ist.

8. Energieerzeugungsanlage nach einem der vorhergehenden Ansprüche, dadurch gekennzeichnet, dass die Ausschubleitung (22) an ihrem Eintrittsende im Bett (14) mit einer Fluidisierungsanordnung (62) versehen ist, die über eine Leitung (63), in der ein Ventil (92) zur Steuerung des Materialflusses durch die Leitung (22) angeordnet ist, an eine Druckgasquelle angeschlossen ist.

9. Energieerzeugungsanlage nach einem der vorhergehenden Ansprüche, dadurch gekennzeichnet, dass die Rückführleitung (23) über eine Leitung (67), in der ein Ventil (30) liegt, an eine Druckgasquelle für Transportgas angeschlossen ist.

10. Energieerzeugungsanlage nach Anspruch 9, dadurch gekennzeichnet, daß die Rückführleitung (23) ein Materialschloß in Gestalt eines L-Ventils (51) hat.

11. Energiererzeugungsanlage nach einem der Ansprüche 8 bis 10, dadurch gekennzeichnet, dass die genannte Druckgasquelle der Druckbehälter (10) ist.

12. Energieerzeugungsanlage nach einem der vorhergehenden Ansprüche, dadurch gekennzeichnet, dass der Vorratsbehälter (21) mit einer Wärmeisolierung (24) versehen ist.

13. Energieerzeugungsanlage nach einem der vorhergehenden Ansprüche, dadurch gekennzeichnet, dass der Vorratsbehälter mit einer Heizvorrichtung (25) versehen ist.

14. Energieerzeugungsanlage nach einem der vorhergehenden Ansprüche, dadurch gekennzeichnet, dass in der Leitung (34) eine Anordnung zur Drucksenkung angeordnet ist, die darin besteht, dass der Verlaut der Leitung (34) abrupte, einen Druckverlust erzeugende Richtungsänderungen aufweist, wobei zur Kühlung des Transportgases Verbrennungsluft die Anordnung zur Drucksenkung umströmt, bevor sie dem Wirbelbett zugeführt wird.

15. Energieerzeugungsanlage nach einem der vorhergehenden Ansprüche, dadurch gekennzeichnet, dass mehrere Vorratsbehälter (21), von denen jeder mit Ausschub- und Rückführleitungen (22, 23) versehen ist, zum Ausschub bzw. zur Rückführung von Bettmaterial aus bzw. zu einer gemeinsamen Brennkammer (8) vorhanden sind.

16. Energieerzeugungsanlage nach Anspruch 10, dadurch gekennzeichnet, dass das Ventil (51) mit Anordnungen für die Zufuhr von inertem Sperrgas versehen sind.

17. Energieerzeugungsanlage nach Anspruch 16, dadurch gekennzeichnet, dass das Sperrgas Wasserdampf ist.

## Claims

1. Power plant with a fluidized bed combustion chamber (8) for the combustion of fuel supplied to the fluidized bed (14) and with means for transferring bed material from the combustion chamber (8) to at least one storage container (21) and vice versa, with a separate feed-out conduit (22) for the transfer of bed material from the combustion chamber to the storage container (21), the transport of bed material through feed-out conduit (22) being controllable by a valve (31), and with a separate return conduit (23) for the return of bed material from the storage container (21) to the combustion chamber, the transport of bed material through this conduit being adapted to be supplied via a valve (30) connected to a pressure gas source, characterized in that
to control the height of the bed in the combustion chamber in dependence on the operational conditions and to avoid a direct contact of movable parts of the transfer device with the hot erosive bed material
- the storage container (21) is connected via a conduit (34), provided with a valve (31), to a space in which a pressure prevails lower than that in the combustion chamber (8),
- the feed-out conduit (22) which connects the combustion chamber (8) with the storage container does not comprise any valves with movable parts,
- the bed material substantially is supplied against the force of gravity from the combustion chamber to the storage container (21),
- that a locking device (51) for the material is arranged in the return conduit (23) from the storage container, which prevents any unwanted transport of bed material caused by force of gravity from the storage container to the combustion chamber,
- and that the locking device (51) for the material is controllable by a valve (30) connected to a pressure gas source (11).

2. Power plant according to claim 1, characterized in that the combustion chamber (8) is enclosed in a pressure vessel (10), being pressurized by compressed combustion air (a so-called PFBC plant).

3. Power plant according to claim 2, characterized in that the storage container (21) is accommodated in the pressure vessel (10).

4. Power plant according to any of the preceding claims, characterized in that the outlet end of the feed-out conduit (22) opens out into a dust separator (26) above the storage container.

5. Power plant according to any of claims 1 to 3, characterized in that the outlet end (22a) of the feed-out conduit opens out immediately into the upper portion of the storage container and extends substantially vertical.

6. Power plant according to claim 5, characterized in that the wall of the outlet end (22a) of the feed-out conduit (22) is provided with openings (60) at a certain distance from the outlet.

7. Power plant according to claim 6, characterized in that the outlet end (22a) of the feed-out conduit (22) is provided with a sleeve placed concentrically around the portion with the openings (60).

8. Power plant according to any of the preceding claims, characterized in that the feed-out conduit (22) at its inlet end in the bed (14) is provided with means (62) for fluidization which is, via a conduit (63) provided with a valve (92) for controlling the flow of material through the conduit (22), is connected to a pressure gas source.

9. Power plant according to any of the preceding claims, characterized in that the return conduit (23), via a conduit (67) provided with a valve (30), is connected to a pressure gas source for transport gas.

10. Power plant according to claim 9, characterized in that the return conduit (23) includes a locking device for the material in the form of an L-valve (51).

11. Power plant according to any of claims 8 to 10, characterized in that said pressure gas source is the pressure vessel (10).

12. Power plant according to any of the preceding claims, characterized in that the storage container (21) is provided with a heat insulation (24).

13. Power plant according to any of the preceding claims, characterized in that the storage container is provided with heating means (25).

14. Power plant according to any of the preceding claims, characterized in that the conduit (34) includes means for pressure reduction consisting in that the cource of the conduit (34) exhibits abrupt changes in direction causing a loss of pressure whereby, for cooling of the transport gas, combustion air flows around the pressure reduction means prior to being supplied to the fluidized bed.

15. Power plant according to any of the preceding claims, characterized in that there is a number of storage containers (21) each being provided with feed-out and return conduits (22, 23) for feeding out or returning of bed material from or into, respectively, a common combustion chamber (8).

16. Power plant according to claim 10, characterized in that the valve (51) is provided with means for the supply of inert sealing gas.

17. Power plant according to claim 16, characterized in that the sealing gas consists of water vapour.

## Revendications

1. Centrale électrique comprenant une chambre de combustion (8) à lit fluidisé pour brûler du combustible envoyé au lit fluidisé (14) et des dispositifs pour faire passer de la matière du lit de la chambre de combustion (8) à au moins un réservoir (21) et inversement, ayant un conduit d'extraction (22) distinct pour le passage de la matière du lit de la chambre de combustion au réservoir (21), le passage de la matière du lit par le conduit d'extraction (22) pouvant être commandé par une vanne (31) et ayant un conduit de retour (23) distinct pour le retour de la matière du lit du réservoir (21) à la chambre de combustion, du gaz comprimé pouvant être amené pour le passage de la matière du lit dans ce conduit, par une vanne (30) raccordée à une source de gaz comprimé, caractérisée,
en ce que, pour se rendre maître de la hauteur du lit de la chambre de combustion en fonction des conditions de fonctionnement et pour prévenir tout contact direct de parties mobiles du dispositif de passage avec la matière du lit chaude et érosive,
- le réservoir (21) est raccordé par un conduit (34) muni d'une vanne (31) à un espace dans lequel règne une pression plus petite que dans la chambre de combustion (8),
- le conduit d'extraction (22), qui met la chambre de combustion (8) en communication avec le réservoir, ne comporte pas de vanne à pièce mobile,
- la matière du lit est transportée essentiellement à l'encontre de l'action de la force de gravité de la chambre de combustion au réservoir (21),
- dans le conduit de retour (23) allant du réservoir à la chambre de combustion est prévu un dispositif (51) permettant d'arrêter la matière, qui empêche un passage intempestif, provoqué par l'effet de la force de gravité, de la matière du lit du réservoir à la chambre de combustion,
- et le dispositif (51) destiné à arrêter la matière peut être commandé par la vanne (30) raccordée à une source (11) de gaz comprimé.

2. Centrale électrique suivant la revendication 1, caractérisée en ce que la chambre de combustion (8) est enfermée dans une cuve sous pression (10) qui est mise sous pression par de l'air de combustion comprimé (centrale dite PFBC).

3. Centrale électrique suivant la revendication 2, caractérisée en ce que le réservoir (21) est disposé dans la cuve sous pression (10).

4. Centrale électrique suivant l'une des revendications précédentes, caractérisée en ce que l'extrémité de sortie du conduit d'extraction (22) débouche dans un séparateur de poussière (26), au-dessus du réservoir.

5. Centrale électrique suivant l'une des revendications 1 à 3, caractérisée en ce que l'extrémité de sortie (22a) du conduit d'extraction débouche directement à la partie supérieure du réservoir et est dirigée sensiblement verticalement.

6. Centrale électrique suivant la revendication 5, caractérisée en ce que la paroi de l'extrémité de sortie (22a) du conduit d'extraction (22) est munie d'orifices (60) à une certaine distance de l'embouchure.

7. Centrale électrique suivant la revendication 6, caractérisée en ce que l'extrémité de sortie (22a) du conduit d'extraction (22) est munie d'un manchon (91) qui est disposé concentriquement à la partie ayant les orifices (60).

8. Centrale électrique suivant l'une des revendications précédentes, caractérisée en ce que le conduit d'extraction (22) est muni, à son extrémité d'entrée dans le lit (14), d'un dispositif (62) de fluidisation qui est raccordé à une source de gaz comprimé par un conduit (63) dans lequel est montée une vanne (92) destinée à commander le débit de matière dans le conduit (22).

9. Centrale électrique suivant l'une des revendications précédentes, caractérisée en ce que le conduit de retour (23) est raccordé à une source de gaz comprimé pour le gaz de transport par un conduit (67), dans lequel est montée une vanne (30).

10. Centrale électrique suivant la revendication 9, caractérisée en ce que le conduit de retour (23) a un dispositif destiné à arrêter la matière sous la forme d'une vanne (51) en L.

11. Centrale électrique suivant l'une des revendications 8 à 10, caractérisée en ce que ladite source de gaz comprimé est la cuve sous pression (10).

12. Centrale électrique suivant l'une des revendications précédentes, caractérisée en ce que le réservoir (21) est muni d'un calorifugeage (24).

13. Centrale électrique suivant l'une des revendications précédentes, caractérisée en ce que le réservoir est muni d'un dispositif (25) de chauffage.

14. Centrale électrique suivant l'une des revendications précédentes, caractérisée en ce que dans le conduit (34) est monté un dispositif d'abaissement de la pression qui consiste en ce que le conduit (34) présente des variations abruptes de direction produisant une perte de charge, de l'air de combustion léchant, pour refroidir le gaz de transport, le dispositif d'abaissement avant de retourner au lit fluidisé.

15. Centrale électrique suivant l'une des revendications précédentes, caractérisée en ce qu'il est prévu plusieurs réservoirs (21), chacun d'entre eux étant muni de conduits d'extraction (22) et de retour (23) pour extraire de la matière du lit d'une chambre de combustion (8) commune et pour l'y retourner.

16. Centrale électrique suivant la revendication 10, caractérisée en ce que la vanne (51) est munie de dispositifs pour l'amenée de gaz d'arrêt inerte.

17. Centrale électrique suivant la revendication 16, caractérisée en ce que le gaz d'arrêt est de la vapeur d'eau.
